# EUROPÄISCHE PATENTSCHRIFT

(11) **EP 3 827 215 B1**
(45) Veröffentlichungstag und Bekanntmachung des Hinweises auf die Patenterteilung: **10.05.2023**
(21) Anmeldenummer: 19744662.8
(22) Anmeldetag: 22.07.2019
(51) Int. Cl.: G01B 11/24

(54) **VORRICHTUNG ZUR BESTIMMUNG DES DURCHMESSERS UND/ODER DER AUSSENKONTUR EINES STRANGFÖRMIGEN GEGENSTANDES**
APPARATUS FOR DETERMINING THE DIAMETER AND/OR THE OUTER CONTOUR OF A STRAND-SHAPED OBJECT
DISPOSITIF DE DÉTERMINATION DU DIAMÈTRE ET/OU DU CONTOUR EXTÉRIEUR D'UN OBJET EN FORME DE BARRE

(30) Priorität: 26.07.2018 DE 102018118097
(43) Veröffentlichungstag der Anmeldung: 02.06.2021
(73) Patentinhaber: SIKORA AG, 28307 Bremen (DE)
(72) Erfinder: SIKORA, Harald, 28357 Bremen (DE)
(74) Vertreter: Hauck Patentanwaltspartnerschaft mbB
(86) Internationale Anmeldenummer: PCT/EP2019/069673
(87) Internationale Veröffentlichungsnummer: WO 2020/020820

(56) Entgegenhaltungen:
- DE-A1-102009 000 834
- DE-A1-102011 050 052
- DE-A1-102016 111 044
- DE-U1-202016 008 526

## Beschreibung

Die Erfindung betrifft eine Vorrichtung zur Bestimmung des Durchmessers und/oder der Außenkontur eines strangförmigen Gegenstandes, umfassend mindestens eine Sendeeinrichtung zum Aussenden von Messstrahlung auf den strangförmigen Gegenstand, wobei die Messstrahlung durch den strangförmigen Gegenstand reflektiert wird, weiter umfassend mindestens eine Empfangseinrichtung zum Empfangen der von der mindestens einen Sendeeinrichtung ausgesandten und von dem strangförmigen Gegenstand reflektierten Messstrahlung, und umfassend eine Auswerteeinrichtung, die dazu eingerichtet ist, anhand der von der mindestens einen Empfangseinrichtung empfangenen Messstrahlung den Durchmesser und/oder die Außenkontur des strangförmigen Gegenstandes zu bestimmen.

Bei derartigen Vorrichtungen wird von der Sendeeinrichtung ausgestrahlte Messstrahlung von dem strangförmigen Gegenstand, beispielsweise einem Metallrohr, reflektiert und gelangt teilweise zurück zu der beispielsweise am selben Ort wie die Sendeeinrichtung angeordneten Empfangseinrichtung. Anhand einer Laufzeitmessung kann durch die Auswerteeinrichtung der Abstand der Sende- und Empfangseinrichtungen zu der Oberfläche des strangförmigen Gegenstandes gemessen werden. Wird diese Messung beispielsweise von gegenüberliegenden Seiten des strangförmigen Gegenstandes durchgeführt, kann hieraus auf den Durchmesser des Rohres geschlossen werden. In solchen Vorrichtungen verwendete Sendeeinrichtungen besitzen einen größeren Abstrahlwinkel, wobei ein Großteil der ausgesandten Messstrahlung von dem strangförmigen Gegenstand in unterschiedliche Richtungen im Raum reflektiert wird und damit nicht zur Empfangseinrichtung gelangt und entsprechend nicht für die Auswertung zur Verfügung steht.

Aus DE 20 2016 008 526 U1 ist eine Vorrichtung zum Messen des Durchmessers und/oder der Wanddicke eines Strangs mittels Terahertzstrahlung bekannt. Von einem Sender ausgesandte Terahertzstrahlung wird auf einen durch die Vorrichtung geführten Strang geleitet. Dem Sender gegenüberliegend hinter dem Strang ist ein Reflektor für Terahertzstrahlung angeordnet. Ein vorzugsweise am selben Ort wie der Sender angeordneter Empfänger empfängt an dem Strang und/oder an dem Reflektor reflektierte Terahertzstrahlung. Eine Auswerteeinrichtung bestimmt anhand der von dem Empfänger empfangenen Messsignale den Durchmesser und/oder die Wanddicke des Strangs.

Aus DE 10 2016 111 044 A1 sind eine Terahertz Messvorrichtung und ein Terahertz Messverfahren zur Vermessung eines Prüfobjekts, beispielsweise eines Kunststoffrohrs, mittels Laufzeitmessung bekannt. Zusätzlich zu einer Terahertz Sende- und Empfangseinheit ist mindestens eine passive Terahertz Empfangseinheit vorgesehen, die von der Terahertz Sende- und Empfangseinheit ausgesandte und an dem Prüfobjekt reflektierte zweite Strahlung detektiert. Die passive Terahertz Empfangseinheit nimmt ein Synchronisierungssignal auf, das den Sendezeitpunkt der Terahertzstrahlung festlegt. Auf diese Weise soll mit relativ geringem Aufwand eine breitflächige Vermessung von Messobjekten ermöglicht werden.

Ausgehend von dem erläuterten Stand der Technik liegt der Erfindung daher die Aufgabe zugrunde, eine Vorrichtung der eingangs genannten Art bereitzustellen, mit der in einfacher Weise eine umfassendere Vermessung der Außenkontur eines strangförmigen Gegenstandes möglich ist.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass mindestens ein den strangförmigen Gegenstand zumindest abschnittsweise umgebender Retroreflektor vorgesehen ist, der von dem strangförmigen Gegenstand reflektierte Messstrahlung vollständig oder teilweise retroreflektiert.

Der zu vermessende strangförmige Gegenstand kann beispielsweise eine im Wesentlichen kreiszylindrische Außenkontur besitzen. Er kann für die von der mindestens einen Sendeeinrichtung ausgesandte Messstrahlung im Wesentlichen intransparent sein. Beispielsweise kann es sich bei dem strangförmigen Gegenstand um einen rohrförmigen Gegenstand, wie ein Metallrohr, insbesondere ein Stahlrohr, handeln. Es kann sich aber auch um einen massiven strangförmigen Gegenstand handeln, beispielsweise einen Metallbolzen. Der strangförmige Gegenstand kann in Längsrichtung durch den Messbereich der Sende- und Empfangseinrichtung gefördert und dabei vermessen werden. Dazu kann die erfindungsgemäße Vorrichtung eine geeignete Förderereinrichtung aufweisen.

Erfindungsgemäß ist mindestens ein den zu vermessenden strangförmigen Gegenstand in Umfangsrichtung zumindest teilweise umgebender Retroreflektor vorgesehen. Der Retroreflektor kann den zu vermessenden Gegenstand in Umfangsrichtung im Wesentlichen vollständig, insbesondere bis auf Sende- und Empfangseinrichtungen, umgeben. Der zu vermessende strangförmige Gegenstand kann insbesondere konzentrisch zu dem mindestens einen Retroreflektor angeordnet sein. Von der mindestens einen Sendeeinrichtung wird elektromagnetische Messstrahlung in Richtung des zu vermessenden strangförmigen Gegenstandes ausgesendet und von dem strangförmigen Gegenstand zumindest teilweise reflektiert. Wie bereits erläutert, sendet die mindestens eine Sendeeinrichtung die Messstrahlung mit einem gewissen Abstrahlwinkel aus. Ein geringer Anteil der Messstrahlung, nämlich der Anteil, der mit einem Einfallswinkel von 0°, also lotrecht auf die Außenkontur des strangförmigen Gegenstandes fällt, wird von diesem mit demselben Ausfallswinkel von 0°, also wieder lotrecht, zurückreflektiert, zum Beispiel direkt zu der am selben Ort wie die mindestens eine Sendeeinrichtung angeordneten mindestens einen Empfangseinrichtung. Der weitaus größere Teil der von der mindestens einen Sendeeinrichtung ausgesandten und auf den strangförmigen Gegenstand einfallenden Messstrahlung besitzt dagegen einen Einfallswinkel ≠ 0° und wird entsprechend unter einem Ausfallswinkel von ebenfalls ≠ 0° von dem Gegenstand reflektiert.

Insbesondere dieser im Stand der Technik regelmäßig nicht berücksichtigte bzw. nicht oder nur unter großen Schwierigkeiten auswertbare Anteil der Messstrahlung fällt erfindungsgemäß auf den mindestens einen Retroreflektor. Die auf den Retroreflektor auftreffende Messstrahlung wird von diesem zumindest teilweise, retroreflektiert. Der erfindungsgemäße Retroreflektor reflektiert zumindest einen Teil der einfallenden Strahlung im Wesentlichen unabhängig von der Einfallsrichtung sowie der Ausrichtung des Reflektors im Wesentlichen in die Richtung, aus der die Strahlung gekommen ist. Die mit einem Ausfallswinkel von ≠ 0° von dem strangförmigen Gegenstand reflektierten Strahlungsanteile werden von dem Retroreflektor also zumindest teilweise zurück auf denselben Oberflächenbereich des strangförmigen Gegenstandes reflektiert, von dem sie zuvor auf ihrem Weg zu dem Retroreflektor reflektiert wurden. Der (zweite) Einfallswinkel dieser Strahlungsanteile auf dem strangförmigen Gegenstand entspricht damit ihrem vorherigen Ausfallswinkel. Entsprechend werden diese Strahlungsanteile mit demselben (zweiten) Ausfallswinkel zu der mindestens einen Sendeeinrichtung und damit zu der beispielsweise am selben Ort angeordneten mindestens einen Empfangseinrichtung zurückreflektiert. Insgesamt können auf diese Weise auch solche auf den Retroreflektor auftreffenden Strahlungsanteile zurück zu der mindestens einen Empfangseinrichtung gelangen, und somit erfasst und in einfacher Weise ausgewertet werden, die bei Verwendung eines konventionellen Reflektors nicht zurück zu der Empfangseinrichtung gelangen würden. Es kann entsprechend eine lückenlose Erfassung der Außenkontur im durch die mindestens eine Sendeeinrichtung bestrahlten Oberflächenbereich des zu vermessenden strangförmigen Gegenstandes erfolgen. Es ist erfindungsgemäß nicht erforderlich, dass der Retroreflektor sämtliche einfallenden Strahlungsanteile retroreflektiert. Es ist vielmehr auch denkbar, dass nur ein Teil der auf den Retroreflektor einfallenden Strahlung von diesem in dieselbe Richtung zurückreflektiert wird, aus der die Strahlung gekommen ist, während ein anderer Teil der einfallenden Strahlung in andere Richtungen reflektiert wird und damit für die Auswertung unter Umständen nicht nutzbar ist. Dies ist akzeptabel solange der in die Ausgangsrichtung retroreflektierte Teil der einfallenden Strahlung eine für die Auswertung ausreichende Intensität aufweist.

Wie bereits erläutert, kann die Auswerteeinrichtung zum Beispiel die Laufzeit der Messstrahlung zwischen dem Aussendezeitpunkt durch die mindestens eine Sendeeinrichtung und dem Empfangszeitpunkt durch die mindestens eine Empfangseinrichtung messen. Da die Position der Sende- und Empfangseinrichtungen sowie des Retroreflektors im Raum bekannt sind, kann so der Abstand derselben zu der durch die Sendeeinrichtung bestrahlten Außenkontur des strangförmigen Gegenstandes ermittelt werden. Insbesondere kann so im bestrahlten Bereich die Außenkontur genau bestimmt werden, zum Beispiel Abweichungen von der vorgegebenen Form, zum Beispiel einer Kreisform. So können Oberflächendefekte, wie Dellen oder Beulen, aufgrund des dadurch veränderten Abstands zur Messeinrichtung zuverlässig erkannt werden. Auch kann der Durchmesser des strangförmigen Gegenstandes ermittelt werden, insbesondere wenn von gegenüberliegenden Seiten eine Abstandsmessung zwischen Sende- und Empfangseinrichtung und Oberfläche des strangförmigen Gegenstandes erfolgt. Eine solche Auswertung ist an sich bekannt.

Der Retroreflektor kann ein zusammenhängender Reflektor sein. Er kann aber auch durch eine Mehrzahl einzelner, getrennter Reflektorabschnitte gebildet sein. Als Retroreflektoren kommen zum Beispiel sogenannte Corner-Reflektoren infrage, zum Beispiel in Form von Tripelspiegeln. Auch Winkelreflektoren mit zwei unter einem Winkel zueinander angeordneten Spiegeln kommen infrage. Auch retroreflektierende Folien oder dergleichen wären denkbar. Es kommen wie erläutert insbesondere auch Reflektoren infrage, die mindestens einen Teil der einfallenden Strahlung an ihren Ursprungsort zurückreflektieren. Denkbar wären zum Beispiel Reflektoren mit einer stark aufgerauten Oberfläche oder Reflektoren mit einer Kugeloberfläche.

Wie bereits erwähnt, können mindestens eine Sendeeinrichtung und mindestens eine Empfangseinrichtung im Wesentlichen am selben Ort angeordnet sein. Der Sendebereich der Sendeeinrichtung und der Empfangsbereich der Empfangseinrichtung können dann im Wesentlichen identisch sein. Dies erleichtert die Auswertung der Messergebnisse.

Gemäß einer besonders praxisgemäßen Ausgestaltung können mindestens eine Sendeeinrichtung und mindestens eine Empfangseinrichtung durch mindestens einen Transceiver gebildet sein. Die Sende- und Empfangseinrichtung sind dann zu einem Bauteil kombiniert und damit praktisch am selben Ort angeordnet. Insbesondere können sämtliche Sendeeinrichtungen und sämtliche Empfangseinrichtungen jeweils paarweise durch Transceiver gebildet sein.

Nach einer weiteren Ausgestaltung können mehrere über den Umfang des strangförmigen Gegenstandes verteilt angeordnete Sendeeinrichtungen und mehrere über den Umfang des strangförmigen Gegenstandes verteilt angeordnete Empfangseinrichtungen vorgesehen sein. Sie können zum Beispiel gleichmäßig über den Umfang des zu vermessenden strangförmigen Gegenstandes verteilt angeordnet sein. Durch die vorgenannte Ausgestaltung ist eine zuverlässige Abdeckung des gesamten Umfangs des strangförmigen Gegenstandes und damit eine vollständige Vermessung der Außenkontur und Durchmessermessung an verschiedenen Orten möglich. Damit ist auch eine etwaige Ovalität oder dergleichen zuverlässig erkennbar. Es können insbesondere genauso viele Sendeeinrichtungen wie Empfangseinrichtungen paarweise einander zugeordnet sein, so dass jeweils eine Empfangseinrichtung Messstrahlung von jeweils einer zugeordneten Sendeeinrichtung empfängt. Es können dann paarweise jeweils eine Sendeeinrichtung und eine Empfangseinrichtung im Wesentlichen am selben Ort angeordnet sein. Auch kann eine der Anzahl von Sende- bzw. Empfangseinrichtungen entsprechende Anzahl von Transceivern vorgesehen sein, die jeweils eine Sendeeinrichtung und eine Empfangseinrichtung bilden. Beispielsweise können mindestens drei Sendeeinrichtungen und mindestens drei Empfangseinrichtungen, insbesondere drei Transceiver, vorgesehen sein. Sofern drei drei Sendeeinrichtungen und drei Empfangseinrichtungen, insbesondere drei Transceiver, vorgesehen sind, können diese im Winkelabstand von jeweils 120° zueinander angeordnet sind. Eine solche Anordnung erweist sich als vorteilhaft, da einerseits zuverlässig eine Erfassung der gesamten Außenkontur möglich ist und andererseits eine gegenseitige Störung der Sende- und Empfangseinrichtungen, insbesondere durch Empfang von Messstrahlung von anderen Sendeeinrichtungen als der einer Empfangseinrichtung zugeordneten Sendeeinrichtung zuverlässig vermieden werden kann.

Wie bereits erwähnt, können mindestens drei über den Umfang des strangförmigen Gegenstandes verteilt angeordnete Sendeeinrichtungen und mindestens drei über den Umfang des strangförmigen Gegenstandes verteilt angeordnete Empfangseinrichtungen vorgesehen sein, beispielsweise mindestens drei Transceiver. Es kann dann weiter vorgesehen sein, dass die Auswerteeinrichtung dazu eingerichtet ist, aus einem Vergleich der von den mindestens drei Empfangseinrichtungen empfangenen Messstrahlung auf die Position eines Oberflächendefekts des strangförmigen Gegenstandes zu schließen. Mit mindestens drei Sende- und Empfangseinrichtungen kann wie erläutert eine zuverlässige Abdeckung des gesamten Umfangs des strangförmigen Gegenstandes und damit eine vollständige Vermessung der Außenkontur erfolgen. Ein Oberflächendefekt, wie eine Delle oder eine Beule, erzeugt ein entsprechendes Messsignal in der bzw. den Messeinrichtungen, die durch den Oberflächendefekt reflektierte Messstrahlung detektieren. Sind beispielsweise drei Sende- und Empfangseinrichtungen zum Beispiel in einem Abstand von jeweils 120° über den Umfang des strangförmigen Gegenstandes verteilt angeordnet, kann in Verbindung mit einem den zu vermessenden Gegenstand in Umfangsrichtung im Wesentlichen vollständig, insbesondere bis auf Sende- und Empfangseinrichtungen, umgebenden Retroreflektor durch einen Oberflächendefekt reflektierte Strahlung von zwei der drei Empfangseinrichtungen empfangen werden, von der dritten der drei Empfangseinrichtungen dagegegen nicht. Aus dem Vergleich der Messdaten der mindestens drei Empfangseinrichtungen kann die Auswerteeinrichtung dann sicher diskriminieren, welche Empfangseinrichtungen den Oberflächendefekt erkennen und daraus die Position des Oberflächendefekts feststellen.

Nach einer weiteren Ausgestaltung kann vorgesehen sein, dass mindestens zwei Empfangseinrichtungen und mindestens eine zwischen den mindestens zwei Empfangseinrichtungen angeordnete Sendeeinrichtung vorgesehen sind, und dass die Auswerteeinrichtung dazu eingerichtet ist, aus einem zeitlichen Vergleich der von den Empfangseinrichtungen empfangenen Messstrahlung auf die Position eines Oberflächendefekts des strangförmigen Gegenstandes zu schließen. Je nachdem, ob sich ein Oberflächendefekt näher zu einem ersten oder zweiten der mindestens zwei Empfangseinrichtungen, wird die dem Oberflächendefekt nähere Empfangseinrichtung von dem Oberflächendefekt reflektierte Messstrahlung vor der von dem Oberflächendefekt weiter entfernten Empfangseinrichtung empfangen. Aus dem zeitlichen Vergleich der Messsignale der Empfangseinrichtungen lässt sich so ebenfalls auf die Position des Oberflächendefekts schließen. Die Sendeeinrichtung kann auch Teil eines Transceivers sein. Die Empfangseinrichtungen können insbesondere symmetrisch zu der Sendeeinrichtung angeordnet sein, also insbesondere mit gleichem (Winkel-)abstand zu der Sendeeinrichtung. Dies erleichtert die Auswertung, da die Messsignale der Empfangseinrichtungen bei zum Beispiel perfekt kreisförmiger Oberfläche des strangförmigen Gegenstandes dann gleich sind.

Bei der vorgenannten Ausgestaltung, sowie bei einigen oder sämtlichen der anderen erfindungsgemäßen Ausgestaltungen kann es vorteilhaft oder notwendig sein, die Empfangseinrichtung(en) und/oder die Sendeeinrichtung(en) phasensynchron anzusteuern. Insbesondere sofern eine Frequenzmodulation der durch die mindestens eine Sendeeinrichtung ausgesandten Messstrahlung erfolgt, beispielsweise eine sägezahnförmige Frequenzmodulation, kann es weiterhin vorteilhaft oder notwendig sein, die Empfangseinrichtung(en) und/oder die Sendeeinrichtung(en) frequenzsynchron anzusteuern. Eine phasensynchrone bzw. frequenzsynchrone Ansteuerung ist dem Fachmann an sich bekannt.

Nach einer weiteren Ausgestaltung kann der mindestens eine Retroreflektor im Querschnitt zumindest abschnittsweise kreisförmig ausgebildet sein. Er kann insbesondere im Wesentlichen vollständig im Querschnitt kreisförmig ausgebildet sein. Beispielsweise kann der mindestens eine Retroreflektor eine Kreisform besitzen. Der Retroreflektor kann zum Beispiel in einer im Wesentlichen senkrecht zur Längsachse des strangförmigen Gegenstandes liegenden Ebene angeordnet sein. Bei perfekt kreisförmigem Querschnitt der Außenkontur des strangförmigen Gegenstandes besitzt also jeder Abschnitt des Retroreflektors den gleichen Abstand zur Außenkontur des strangförmigen Gegenstandes. Damit können Abweichungen von einer vorgegebenen Querschnittskreisform des strangförmigen Gegenstandes besonders einfach erkannt werden.

Es ist aber auch möglich, dass der Querschnitt des mindestens einen Retroreflektors zumindest abschnittsweise von einer Kreisform abweicht. Weiterhin ist es möglich, dass der mindestens eine Retroreflektor mehrere in Radialrichtung zueinander versetzt, vorzugsweise stufenartig versetzt, angeordnete diskrete Reflektorabschnitte umfasst. Die mehreren Reflektorabschnitte können jeweils im Querschnitt kreisförmig sein. Sie können jedoch auch eine im Querschnitt von der Kreisform abweichende Form besitzen. Die Reflektorabschnitte sind entsprechend jeweils retroreflektierend. Der Versatz in Radialrichtung bezieht sich dabei auf die Längsachse des strangförmigen Gegenstandes. Die unterschiedlichen Reflektorabschnitte, insbesondere zueinander benachbart angeordnete Reflektorabschnitte, besitzen also unterschiedliche Abstände zu der Oberfläche des zu vermessenden strangförmigen Gegenstandes, beispielsweise eines kreiszylindrischen Gegenstandes. Durch diese Ausgestaltung können verschiedene Bereiche der Außenkontur des strangförmigen Gegenstandes messtechnisch besonders sicher diskriminiert werden. So besteht bei einem beispielsweise vollständig im Querschnitt kreisförmigen Retroreflektor mit einheitlichem Radius das Problem, dass jeweils zwei Oberflächenbereiche der Außenkontur des beispielsweise kreiszylindrischen strangförmigen Gegenstandes den gleichen Einfallswinkel und damit Ausfallswinkel für die Messstrahlung besitzen. Dies führt dazu, dass diese Strahlungsanteile eine identische Laufzeit besitzen und somit gleichzeitig auf die Empfangseinrichtung treffen. Kommt es hierbei zu Laufzeitabweichungen, weil einer der Oberflächenbereiche einen Defekt aufweist, ist es folglich nicht möglich zu bestimmen, welcher der beiden Oberflächenbereiche den Defekt besitzt. Dieses Problem wird durch die vorgenannte Ausgestaltung behoben, indem durch entsprechende Ausgestaltung des Retroreflektors die Laufzeiten solcher Strahlungsanteile bewusst gegeneinander verschoben werden. In Bezug auf die Position der Sende- und Empfangseinrichtungen ist daher insbesondere eine unsymmetrische Ausgestaltung des Retroreflektors denkbar. Insbesondere kann auch vorgesehen sein, dass der mindestens eine Retroreflektor mehrere diskrete Reflektorabschnitte umfasst, wobei die mehreren Reflektorabschnitte in Bezug auf die mindestens eine Sendeeinrichtung und die mindestens eine Empfangseinrichtung unsymmetrisch über eine beispielsweise kreisförmige Umfangslinie angeordnet sind, so dass wiederum die Laufzeiten von durch die Reflektorabschnitte reflektierten Strahlungsanteilen bewusst gegeneinander verschoben werden. Eine unsymmetrische Anordnung bedeutet dabei insbesondere, dass die beispielsweise auf einer konzentrisch zu dem zu vermessenden Strang liegenden Kreisbahn angeordneten Reflektorabschnitte unterschiedliche Winkelabstände zu der mindestens einen Sendeeinrichtung und der mindestens einen Empfangseinrichtung besitzen. Reflektorabschnitte, die von Oberflächenabschnitten des strangförmigen Gegenstandes mit gleichem Einfallswinkel und damit gleichem Ausfallswinkel der Messstrahlung bestrahlt werden, können dann entsprechend ebenso wie bei in Radialrichtung versetzt zueinander angeordneten Reflektorabschnitten messtechnisch sicher diskriminiert werden, da sie bei gleichem Außendurchmesser des strangförmigen Gegenstandes Strahlungsechos zu unterschiedlichen Zeitpunkten liefern.

Erfindungsgemäß ist die von der mindestens einen Sendeeinrichtung ausgesandte Messstrahlung Terahertzstrahlung oder Gigahertzstrahlung. Messstrahlung im Terahertz- oder Gigahertz-Frequenzbereich, beispielsweise Messstrahlung im Radarfrequenzbereich, eignet sich besonders gut für die erfindungsgemäße Messung. Derartige Sende- und Empfangseinrichtungen sind weitestgehend störungsunempfindlich, insbesondere im Hinblick auf hohe Temperaturen, Verschmutzungen, Dampfentwicklung, etc., wie sie gerade bei der Produktion von Stahlrohren auftreten. So ist es möglich, dass der zu vermessende strangförmige Gegenstand direkt nach seiner Herstellung vermessen wird, um auf etwaige unerwünschte Geometrieabweichungen möglichst schnell durch Eingriff in die Produktionsparameter reagieren zu können. Beispielsweise Stahlrohre weisen zu diesem Zeitpunkt noch eine hohe Temperatur auf und werden gleichzeitig regelmäßig gekühlt, beispielsweise mittels Wassers. Dies führt zu starkem Verdampfen und damit einer für optische Messeinrichtungen weniger geeigneten Messumgebung.

Ausführungsbeispiele der Erfindung werden nachfolgend anhand von Figuren näher erläutert. Es zeigen schematisch:
- Figur 1: eine erfindungsgemäße Vorrichtung in einer Querschnittsansicht,
- Figur 2: eine vergrößerte Teildarstellung des Retroreflektors der Vorrichtung aus Figur 1,
- Figur 3: eine weitere Querschnittsdarstellung zur Veranschaulichung der erfindungsgemäßen Auswertung der Messergebnisse,
- Figur 4: eine weitere Querschnittsdarstellung zur Veranschaulichung der erfindungsgemäßen Auswertung der Messergebnisse,
- Figur 5: eine weitere Querschnittsdarstellung zur Veranschaulichung der erfindungsgemäßen Auswertung der Messergebnisse,
- Figur 6: ein Diagramm der von Messstrahlung zurückgelegten Wegstrecke, aufgetragen über dem Einfallswinkel auf dem zu vermessenden strangförmigen Gegenstand,
- Figur 7: eine erfindungsgemäße Vorrichtung nach einem weiteren Ausführungsbeispiel in einer Querschnittsansicht, und
- Figur 8: ein Diagramm mit über der Zeit aufgetragenen Messimpulsen einer Vorrichtung nach Figur 7.

Soweit nichts anderes angegeben ist, bezeichnen in den Figuren gleiche Bezugszeichen gleiche Gegenstände.

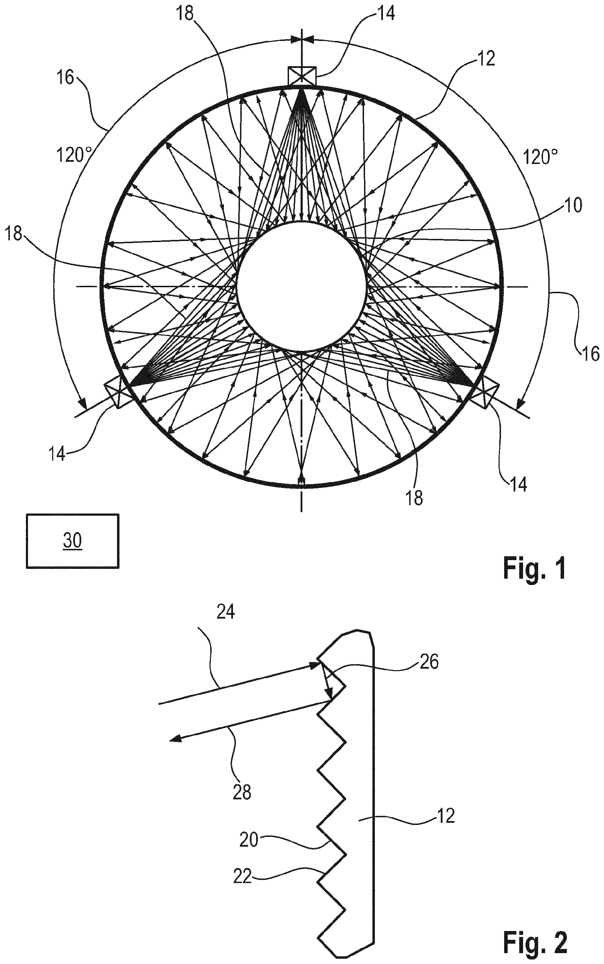

In Figur 1 ist ein strangförmiger Gegenstand 10, in dem gezeigten Beispiel ein Metallrohr 10, wie ein Stahlrohr 10, im Querschnitt gezeigt. Der strangförmige Gegenstand 10 wird in Richtung seiner Längsachse durch die erfindungsgemäße Vorrichtung gefördert, in Figur 1 senkrecht in die Zeichenebene hinein. Hierzu kann die erfindungsgemäße Vorrichtung eine entsprechende Fördereinrichtung umfassen. Der strangförmige Gegenstand 10 besitzt in dem gezeigten Beispiel im Querschnitt eine kreisförmige Außenkontur. Umgeben ist der strangförmige Gegenstand 10 von einem im Querschnitt ebenfalls kreisförmigen Retroreflektor 12. Der strangförmige Gegenstand 10 ist dabei im Wesentlichen konzentrisch zu dem Retroreflektor 12 angeordnet. In dem gezeigten Beispiel umgibt der Retroreflektor 12 den strangförmigen Gegenstand 10 in Umfangsrichtung im Wesentlichen vollständig, bis auf Messöffnungen für in dem gezeigten Beispiel drei Transceiver 14, die jeweils eine Sendeeinrichtung und eine Empfangseinrichtung für Terahertzstrahlung oder Gigahertzstrahlung umfassen. Die Transceiver 14 sind in dem gezeigten Beispiel gleichmäßig über den Umfang des Retroreflektors 12 und damit auch des strangförmigen Gegenstandes 10 verteilt angeordnet, jeweils im Winkelabstand von 120°, wie in Figur 1 für zwei dieser Abstände bei dem Bezugszeichen 16 veranschaulicht.

Wie in Figur 1 durch eine Vielzahl von Pfeilen veranschaulicht, sendet die Sendeeinrichtung jedes Transceivers 14 Messstrahlung 18 mit einem gewissen Abstrahlwinkel, im gezeigten Beispiel etwa 40°, aus. Diese Messstrahlung 18 wird von der Oberfläche des strangförmigen Gegenstands 10 im Wesentlichen vollständig reflektiert, wie in Figur 1 durch die Pfeileschar veranschaulicht. Die von der Oberfläche des strangförmigen Gegenstands 10 reflektierte Messstrahlung gelangt bei einem Einfallswinkel ≠ 0° auf dem strangförmigen Gegenstand 10 aufgrund der entsprechenden Reflexion mit gleichem Ausfallswinkel ≠ 0° zu dem Retroreflektor 12, von dem jeder Strahlungsanteil in derselben Richtung zurückreflektiert wird, also wieder auf den Ort der Oberfläche des strangförmigen Gegenstands 10 von dem die Messstrahlung bereits zuvor reflektiert wurde. Entsprechend gelangt die Messstrahlung dann nach erneuter Reflexion an der Oberfläche des strangförmigen Gegenstands 10 auf ihrem ursprünglichen Weg zurück zu dem Transceiver 14 und damit der jeweiligen Empfangseinrichtung, von der sie als Messereignis detektiert wird.

In Figur 2 ist in vergrößerter Darstellung eine mögliche Ausgestaltung des Retroreflektors 12 dargestellt. In dem gezeigten Beispiel ist dieser als eine Schar von die Innenseite des Retroreflektors 12 bildenden Winkelreflektoren mit jeweils zwei unter einem Winkel von 90° zueinander angeordneten Reflektorspiegeln 20, 22 ausgebildet. Gelangt Messstrahlung zu dem Retroreflektor 12, wie in Figur 2 durch den Pfeil 24 veranschaulicht, wird diese von den beiden Reflektorspiegeln 20, 22 reflektiert, und zwar unabhängig von dem Einfallswinkel auf den Reflektorspiegeln 20, 22 in derselben Richtung, aus der die Messstrahlung zuvor gekommen ist, wie in Figur 2 durch die Pfeile 26 und 28 veranschaulicht. Aus Veranschaulichungsgründen ist in der vergrößerten Darstellung der Figur 2 die kreisförmige Krümmung des Retroreflektors 12 nicht näher dargestellt.

Die erfindungsgemäße Vorrichtung aus Figur 1 umfasst darüber hinaus eine Auswerteeinrichtung 30, die über nicht näher dargestellte Leitungen mit den Transceivern 14 verbunden ist. Insbesondere liegen die Messergebnisse der Empfangseinrichtungen der Transceiver 14 an der Auswerteeinrichtung 30 an und die Auswerteeinrichtung 30 kann auf dieser Grundlage den Durchmesser und/oder die Außenkontur des strangförmigen Gegenstandes 10 rechnerisch ermitteln, insbesondere anhand einer Laufzeitmessung der Messstrahlung 18 bei bekannter Position der Transceiver 14 und des Retroreflektors 12 im Raum.

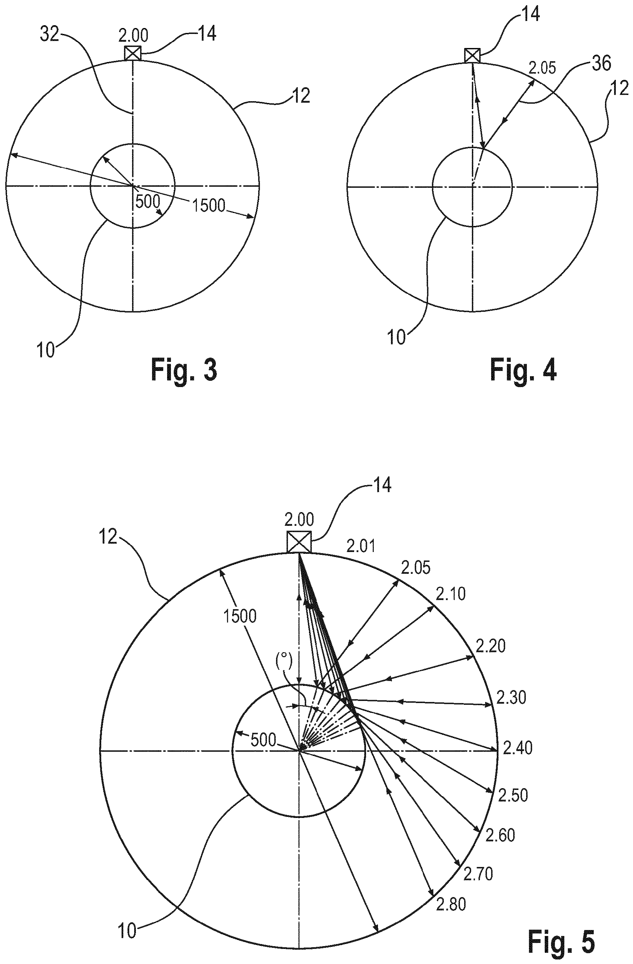

Zur diesbezüglichen weiteren Erläuterung wird auf die Figuren 3 bis 6 verwiesen, wo aus Veranschaulichungsgründen nur einer der Transceiver 14 dargestellt ist. Wie in Figur 3 zu erkennen, besitzt der strangförmige Gegenstand 10 in dem lediglich zur Veranschaulichung gewählten Beispiel einen Durchmesser von 500 mm und der Retroreflektor 12 einen Durchmesser von 1500 mm. In Figur 3 ist für den lotrecht auf den strangförmigen Gegenstand 10 auftreffenden Strahlungsanteil 32 zu erkennen, dass dieser aufgrund seines Einfallswinkels von 0° direkt und ohne Reflexion an dem Retroreflektor 12 zu dem aussendenden Transceiver 14, insbesondere der Empfangseinrichtung des Transceivers 14, zurückreflektiert wird. In dem gezeigten Beispiel beträgt die von diesem Strahlungsanteil 32 zwischen Aussenden durch den Transceiver 14 und Empfang des Transceivers 14 zurückgelegte Wegstrecke also 2,00 m (2000 mm).

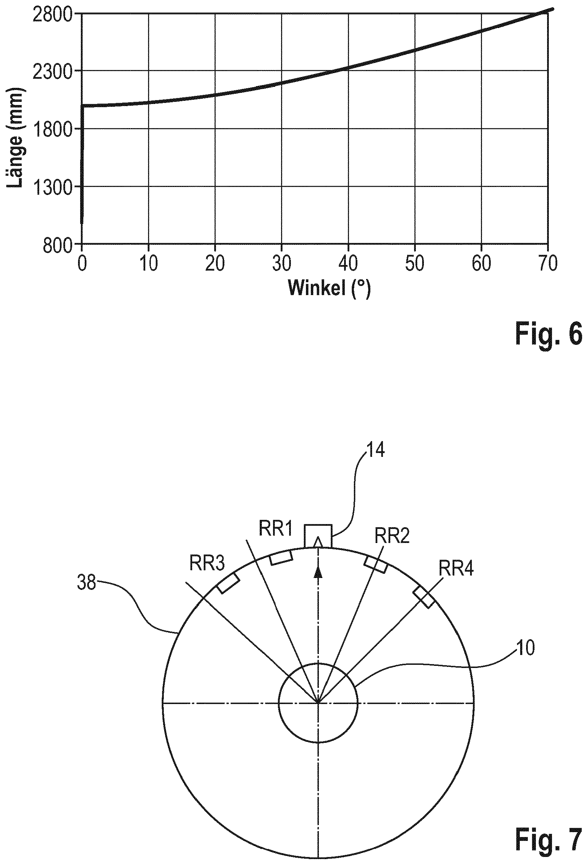

Wie anhand der Figuren 4 und 5 zu erkennen, wächst diese zurückgelegte Wegstrecke mit zunehmendem Einfallswinkel auf dem strangförmigen Gegenstand 10 und entsprechender Reflexion an dem Retroreflektor 12 an. In Figur 4 ist dies für einen Strahlungsanteil bei den Pfeilen 34, 36 dargestellt. Die durch diesen Strahlungsanteil zwischen Aussenden durch den Transceiver 14 und Empfang durch den Transceiver 14 zurückgelegte Wegstrecke beträgt in dem gezeigten Beispiel 2,05 m (2050 mm). In Figur 5 ist dies für eine ganze Reihe weiterer Strahlungsanteile veranschaulicht, wobei im Extremfall des beinahe tangentialen Einfalls auf dem strangförmigen Gegenstand 10 die zurückgelegte Wegstrecke auf 2,80 m (2800 mm) ansteigt. Dies ist auch in dem Diagramm der Figur 6 zu erkennen, wo die insgesamt zurückgelegte Wegstrecke (Länge) in Millimetern über dem Einfallswinkel in Grad aufgetragen ist. Diese Verlängerung der Wegstrecke kann durch die Auswerteeinrichtung 30 bei der Auswertung der Messsignale entsprechend berücksichtigt werden. So können Abweichungen von der jeweils bei perfekter Kreisform des strangförmigen Gegenstands 10 erwarteten Wegstrecke und damit gemessenen Laufzeit zur Erkennung von Oberflächendefekten genutzt werden.

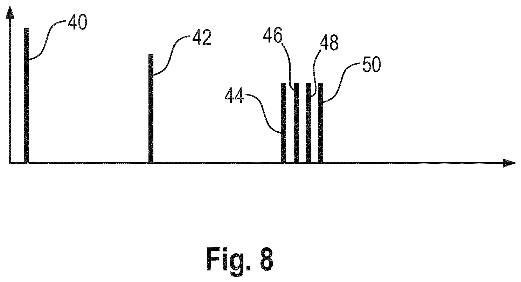

In Figur 7 ist ein weiteres Ausführungsbeispiel einer erfindungsgemäßen Vorrichtung dargestellt. Dabei ist aus Veranschaulichungsgründen nur ein Transceiver 14 dargestellt. Es könnten selbstverständlich auch mehrere Transceiver über den Umfang des U-förmigen Gegenstands 10 verteilt vorgesehen sein. Bei diesem Ausführungsbeispiel weist der Retroreflektor mehrere diskrete Retroeflektorabschnitte RR1, RR2, RR3 und RR4 auf. Die Retroreflektorabschnitte RR1, RR2, RR3 und RR4 sind dabei in Bezug auf den Transceiver 14 unsymmetrisch auf einer kreisförmigen Umfangslinie 38 verteilt angeordnet. Dadurch werden von den unterschiedlichen Retroreflektorabschnitten RR1, RR2, RR3 und RR4 reflektierte Strahlungsanteile auch bei konstantem Durchmesser des strangförmigen Gegenstands 10 zu unterschiedlichen Zeitpunkten von der Empfangseinrichtung des Transceiver 14 empfangen. Dadurch können die Strahlungsanteile zuverlässig bei der Auswertung diskriminiert werden. Dies ist in dem Diagramm der Figur 8 veranschaulicht, in dem die gesendete bzw. empfangene Strahlungsintensität über der Zeit aufgetragen ist. Bei dem Bezugszeichen 40 ist ein Sendeimpuls des Transceivers 14 gezeigt, bei dem Bezugszeichen ist ein empfangenes Strahlungsecho des von dem strangförmigen Gegenstand 10 direkt zum Transceiver 14 zurückreflektierten Strahlungsanteils gezeigt. Bei den Bezugszeichen 44, 46, 48 und 50 sind Strahlungsechos der von den Reflektorabschnitten RR1, RR2, RR3 und RR4 jeweils zurückreflektierten Strahlungsanteile gezeigt. Dieses Ergebnis ließe sich beispielsweise auch erreichen, wenn zum Beispiel in Bezug auf den Transceiver 14 symmetrisch auf der Umfangslinie 38 angeordnete Retroreflektorabschnitte in radialer Richtung zueinander versetzt sind, also nicht sämtlich auf der Umfangslinie 38 angeordnet sind.

### Bezugszeichenliste

- 10: Strangförmiger Gegenstand
- 12: Retroreflektor
- 14: Transceiver
- 16: Winkelabstand
- 18: Messstrahlung
- 20: Reflektorspiegel
- 22: Reflektorspiegel
- 24: Pfeil
- 26: Pfeil
- 28: Pfeil
- 30: Auswerteeinrichtung
- 32: Strahlungsanteil
- 34: Pfeil
- 36: Pfeil
- 38: Umfangslinie
- 40: Sendeimpuls
- 42: Strahlungsecho
- 44: Strahlungsecho
- 46: Strahlungsecho
- 48: Strahlungsecho
- 50: Strahlungsecho

## Patentansprüche

1. Vorrichtung zur Bestimmung des Durchmessers und/oder der Außenkontur eines strangförmigen Gegenstandes (10), umfassend mindestens eine Sendeeinrichtung zum Aussenden von Terahertzstrahlung oder Gigahertzstrahlung als Messstrahlung (18) auf den strangförmigen Gegenstand (10), wobei die Messstrahlung (18) durch den strangförmigen Gegenstand (10) reflektiert wird, weiter umfassend mindestens eine Empfangseinrichtung zum Empfangen der von der mindestens einen Sendeeinrichtung ausgesandten und von dem strangförmigen Gegenstand (10) reflektierten Messstrahlung (18), und umfassend eine Auswerteeinrichtung (30), die dazu eingerichtet ist, anhand der von der mindestens einen Empfangseinrichtung empfangenen Messstrahlung (18) den Durchmesser und/oder die Außenkontur des strangförmigen Gegenstandes (10) zu bestimmen, **dadurch gekennzeichnet, dass** die Vorrichtung mindestens einen den strangförmigen Gegenstand (10) in Umfangsrichtung zumindest abschnittsweise umgebenden Retroreflektor (12) umfasst, der von dem strangförmigen Gegenstand (10) reflektierte Messstrahlung (18) vollständig oder teilweise retroreflektiert.

2. Vorrichtung nach Anspruch 1, **dadurch gekennzeichnet, dass** mindestens eine Sendeeinrichtung und mindestens eine Empfangseinrichtung im Wesentlichen am selben Ort angeordnet sind.

3. Vorrichtung nach einem der vorhergehenden Ansprüche, **dadurch gekennzeichnet, dass** mindestens eine Sendeeinrichtung und mindestens eine Empfangseinrichtung durch mindestens einen Transceiver (14) gebildet sind.

4. Vorrichtung nach einem der vorhergehenden Ansprüche, **dadurch gekennzeichnet, dass** mehrere über den Umfang des strangförmigen Gegenstandes (10) verteilt angeordnete Sendeeinrichtungen und mehrere über den Umfang des strangförmigen Gegenstandes (10) verteilt angeordnete Empfangseinrichtungen vorgesehen sind.

5. Vorrichtung nach Anspruch 4, **dadurch gekennzeichnet, dass** mindestens drei über den Umfang des strangförmigen Gegenstandes (10) verteilt angeordnete Sendeeinrichtungen und mindestens drei über den Umfang des strangförmigen Gegenstandes (10) verteilt angeordnete Empfangseinrichtungen vorgesehen sind, und dass die Auswerteeinrichtung dazu eingerichtet ist, aus einem Vergleich der von den mindestens drei Empfangseinrichtungen empfangenen Messstrahlung auf die Position eines Oberflächendefekts des strangförmigen Gegenstandes (10) zu schließen.

6. Vorrichtung nach einem der vorhergehenden Ansprüche, **dadurch gekennzeichnet, dass** mindestens zwei Empfangseinrichtungen und mindestens eine zwischen den mindestens zwei Empfangseinrichtungen angeordnete Sendeeinrichtung vorgesehen sind, und dass die Auswerteeinrichtung dazu eingerichtet ist, aus einem zeitlichen Vergleich der von den Empfangseinrichtungen empfangenen Messstrahlung auf die Position eines Oberflächendefekts des strangförmigen Gegenstandes zu schließen.

7. Vorrichtung nach einem der vorhergehenden Ansprüche, **dadurch gekennzeichnet, dass** der mindestens eine Retroreflektor (12) im Querschnitt zumindest abschnittsweise kreisförmig ausgebildet ist.

8. Vorrichtung nach einem der vorhergehenden Ansprüche, **dadurch gekennzeichnet, dass** der Querschnitt des mindestens einen Retroreflektors (12) zumindest abschnittsweise von einer Kreisform abweicht.

9. Vorrichtung nach einem der vorhergehenden Ansprüche, **dadurch gekennzeichnet, dass** der mindestens eine Retroreflektor (12) mehrere in Radialrichtung zueinander versetzt, vorzugsweise stufenartig versetzt, angeordnete Reflektorabschnitte umfasst.

10. Vorrichtung nach einem der vorhergehenden Ansprüche, **dadurch gekennzeichnet, dass** der mindestens eine Retroreflektor (12) mehrere Reflektorabschnitte umfasst, wobei die mehreren Reflektorabschnitte in Bezug auf die mindestens eine Sendeeinrichtung und die mindestens eine Empfangseinrichtung unsymmetrisch angeordnet sind.

11. Vorrichtung nach einem der Ansprüche 9 oder 10, **dadurch gekennzeichnet, dass** die mehreren Reflektorabschnitte jeweils im Querschnitt kreisförmig sind.

## Claims

1. A device for determining the diameter and/or outer contour of a strand-shaped object (10), comprising at least one transmission apparatus for emitting terahertz radiation or gigahertz radiation as measuring radiation (18) onto the strand-shaped object (10), wherein the measuring radiation (18) is reflected by the strand-shaped object, further comprising at least one receiving apparatus for receiving the measuring radiation (18) emitted by the at least one transmission apparatus and reflected by the strand-shaped object (10), and comprising an evaluation apparatus (30) which is configured to determine the diameter and/or outer contour of the strand-shaped object (10) based on the measuring radiation (18) received by the at least one receiving apparatus, **characterized in that** the device comprises at least one retroreflector (12) that surrounds the strand-shaped object (10) at least in portions in the circumferential direction and that retroreflects some or all of the measuring radiation (18) reflected by the strand-shaped object (10).

2. The device according to claim 1, **characterized in that** at least one transmission apparatus and at least one receiving apparatus are arranged substantially at the same location.

3. The device according to any one of the preceding claims, **characterized in that** at least one transmission apparatus and at least one receiving apparatus are formed by at least one transceiver (14).

4. The device according to any one of the preceding claims, **characterized in that** multiple transmission apparatuses arranged so as to be distributed around the circumference of the strand-shaped object (10) and multiple receiving apparatuses arranged so as to be distributed around the circumference of the strand-shaped object (10) are provided.

5. The device according to claim 4, **characterized in that** at least three transmission apparatuses arranged so as to be distributed around the circumference of the strand-shaped object (10) and at least three receiving apparatuses arranged so as to be distributed around the circumference of the strand-shaped object (10) are provided, and **in that** the evaluation apparatus is configured to infer the position of a surface defect of the strand-shaped object (10) from a comparison of the measuring radiation received by the at least three receiving apparatuses.

6. The device according to any one of the preceding claims, **characterized in that** at least two receiving apparatuses and at least one transmission apparatus arranged between the at least two receiving apparatuses are provided, and **in that** the evaluation apparatus is configured to infer the position of a surface defect of the strand-shaped object (10) from a temporal comparison of the measuring radiation received by the receiving apparatuses.

7. The device according to any one of the preceding claims, **characterized in that** the at least one retroreflector (12) is circular in cross section at least in portions.

8. The device according to any one of the preceding claims, **characterized in that** the cross section of the at least one retroreflector (12) deviates from a circle shape at least in portions.

9. The device according to any one of the preceding claims, **characterized in that** the at least one retroreflector (12) comprises multiple reflector portions arranged so as to be offset relative to one another in the radial direction, preferably so as to be offset in a stepped manner.

10. The device according to any one of the preceding claims, **characterized in that** the at least one retroreflector (12) comprises multiple reflector portions, wherein the multiple reflector portions are arranged asymmetrically with respect to the at least one transmission apparatus and the at least one receiving apparatus.

11. The device according to any one of claims 9 or 10, **characterized in that** the multiple reflector portions are each circular in cross section.

## Revendications

1. Dispositif de détermination du diamètre et/ou du contour extérieur d'un objet en forme de barre (10), comportant au moins un appareil émetteur pour l'émission d'un rayonnement térahertz ou d'un rayonnement gigahertz en tant que rayonnement de mesure (18) vers l'objet en forme de barre (10), dans lequel le rayonnement de mesure (18) est réfléchi par l'objet en forme de barre (10), comportant en outre au moins un appareil récepteur pour la réception du rayonnement de mesure (18) émis par l'au moins un appareil émetteur et réfléchi par l'objet en forme de barre (10), et comportant un appareil d'évaluation (30) conçu pour déterminer le diamètre et/ou le contour extérieur de l'objet en forme de barre (10) à l'aide du rayonnement de mesure (18) reçu par l'au moins un appareil récepteur, **caractérisé en ce que** le dispositif comporte au moins un rétro-réflecteur (12) entourant au moins partiellement l'objet en forme de barre (10), lequel rétroréfléchit entièrement ou partiellement le rayonnement de mesure (18) réfléchi par l'objet en forme de barre (10).

2. Dispositif selon la revendication 1, **caractérisé en ce qu'**au moins un appareil émetteur et au moins un appareil récepteur sont disposés quasiment au même endroit.

3. Dispositif selon l'une des revendications précédentes, **caractérisé en ce qu'**au moins un appareil émetteur et au moins un appareil récepteur sont formés par au moins un émetteur-récepteur (14).

4. Dispositif selon l'une des revendications précédentes, **caractérisé en ce qu'**il est prévu plusieurs appareils émetteurs disposés de manière à être répartis sur le pourtour de l'objet en forme de barre (10) et plusieurs appareils récepteurs disposés de manière à être répartis sur le pourtour de l'objet en forme de barre (10).

5. Dispositif selon la revendication 4, **caractérisé en ce qu'**il est prévu au moins trois appareils émetteurs disposés de manière à être répartis sur le pourtour de l'objet en forme de barre (10) et au moins trois appareils récepteurs disposés de manière à être répartis sur le pourtour de l'objet en forme de barre (10), et **en ce que** l'appareil d'évaluation est conçu pour déduire la position d'un défaut de surface de l'objet en forme de barre (10) à partir d'une comparaison du rayonnement de mesure reçu par les au moins trois appareils récepteurs.

6. Dispositif selon l'une des revendications précédentes, **caractérisé en ce qu'**il est prévu au moins deux appareils récepteurs et au moins un appareil émetteur disposé entre les au moins deux appareils récepteurs, et **en ce que** l'appareil d'évaluation est conçu pour déduire la position d'un défaut de surface de l'objet en forme de barre à partir d'une comparaison temporelle du rayonnement de mesure reçu par les appareils récepteurs.

7. Dispositif selon l'une des revendications précédentes, **caractérisé en ce que** l'au moins un rétro-réflecteur (12) est formé avec une section transversale au moins partiellement circulaire.

8. Dispositif selon l'une des revendications précédentes, **caractérisé en ce que** la section transversale de l'au moins un rétro-réflecteur (12) diffère au moins partiellement d'une forme de cercle.

9. Dispositif selon l'une des revendications précédentes, **caractérisé en ce que** l'au moins un rétro-réflecteur (12) comporte plusieurs sections de réflecteur disposées en décalage les unes par rapport aux autres, de préférence en décalage de façon étagée.

10. Dispositif selon l'une des revendications précédentes, **caractérisé en ce que** l'au moins un rétro-réflecteur (12) comporte plusieurs sections de réflecteur, dans lequel les plusieurs sections de réflecteur sont disposées de façon asymétrique par rapport à l'au moins un appareil émetteur et à l'au moins un appareil récepteur.

11. Dispositif selon l'une des revendications 9 ou 10, **caractérisé en ce que** les plusieurs sections de réflecteur présentent respectivement une section transversale circulaire.
